# EUROPÄISCHE PATENTSCHRIFT

(11) **EP 1 794 042 B1**
(45) Veröffentlichungstag und Bekanntmachung des Hinweises auf die Patenterteilung: **08.08.2012**
(21) Anmeldenummer: 05789504.7
(22) Anmeldetag: 07.09.2005
(51) Int. Cl.: B60T 8/40

(54) **VERFAHREN ZUR STEUERUNG ODER REGELUNG EINES ELEKTRONISCH ANSTEUERBAREN, NACH DEM RÜCKFÖRDERPRINZIP ARBEITENDEN FAHRZEUGBREMSSYSTEMS UND ELEKTRONISCH ANSTEUERBARES, NACH DEM RÜCKFÖRDERPRINZIP ARBEITENDES FAHRZEUGBREMSSYSTEM**
METHOD FOR CONTROL OR REGULATION OF AN ELECTRONICALLY-CONTROLLED VEHICLE BRAKING SYSTEM OPERATING BY THE RECIRCULATION PRINCIPLE AND ELECTRONICALLY-CONTROLLED VEHICLE BRAKING SYSTEM OPERATING BY THE RECIRCULATION PRINCIPLE
PROCEDE POUR ASSURER LA COMMANDE OU LA REGULATION D'UN SYSTEME DE FREINAGE DE VEHICULE, A COMMANDE ELECTRONIQUE, FONCTIONNANT SELON LE PRINCIPE DE REFOULEMENT ET SYSTEME DE FREINAGE DE VEHICULE, A COMMANDE ELECTRONIQUE, FONCTIONNANT SELON LEDIT PRINCIPE

(30) Priorität: 18.09.2004 DE 102004045391
(43) Veröffentlichungstag der Anmeldung: 13.06.2007
(73) Patentinhaber: ROBERT BOSCH GMBH, 70442 Stuttgart (DE)
(72) Erfinder: KLUG, Andreas, 74199 Untergruppenbach (DE); ZEGELAAR, Peter, NL-6419 JO Heerlen (NL); HILD, Heiner, 71638 Ludwigsburg (DE)
(86) Internationale Anmeldenummer: PCT/EP2005/054425
(87) Internationale Veröffentlichungsnummer: WO 2006/029979

(56) Entgegenhaltungen:
- DE-A1- 3 935 071
- DE-A1- 4 232 614
- DE-A1- 4 440 517
- DE-A1- 10 309 418
- DE-A1- 19 632 311
- DE-A1- 19 960 336
- US-A- 5 487 593

## Beschreibung

### Stand der Technik

Die Erfindung geht aus von einem Verfahren zur Steuerung oder Regelung eines elektronisch ansteuerbaren, nach dem Rückförderprinzip arbeitenden Fahrzeugbremssystem nach dem gattungsbildenden Merkmalen des Anspruchs 1 bzw. von einem elektronisch ansteuerbaren, nach dem Rückförderprinzip arbeitenden Fahrzeugbremssystem entsprechend den gattungsbildenden Merkmalen des Anspruch 5.

Bekannt ist aus der DE 196 32 311 A1 ein Verfahren, bei dem die Förderleistung der Pumpe derart bemessen wird, dass die Zeitspanne für zwei aufeinander folgende Bremsdruckabbauphasen zum vollständigen Entleeren eines Niederdruckspeichers genügt. Im Falle des in der DE 103 09 418 A1 beschriebenen Verfahrens ist für eine Ansteuerung einer Hydraulikpumpe ebenfalls der Füllstand eines Niederdruckspeichers maßgebend.
In beiden Offenbarungen dient demnach die Bewegung des Bremspedals nicht als Steuergröße.

Ein elektronisch ansteuerbares, nach dem Rückförderprinzip arbeitendes Fahrzeugbremssystem ist darüber hinaus bekannt aus der DE 199 40 263 A1. Dieses bekannte Fahrzeugbremssystem weist einen vom Fahrer per Pedal betätigbaren Hauptbremszylinder mit zwei Bremskammern auf, an die jeweils ein Bremskreis angeschlossen ist. In jedem Bremskreis sind zwei Radbremsen, sowie zwei Einrichtungen zum Modulation des Bremsdrucks an diesen Radbremsen angeordnet. Jede Einrichtung zum Modulation des Bremsdrucks umfasst einen Druckaufbauventil und ein Druckabsenkventil. Das Druckaufbauventil ist in eine erste Druckmittelverbindung zwischen Hauptbremszylinder und Radbremse geschaltet, während das Druckabsenkventil in einer zweiten Druckmittelverbindung angeordnet ist, die Druckmittel von der Radbremse wegführt. Ferner ist ein extern angetriebener Druckerzeuger vorhanden. Dessen Saugseite ist stromabwärts des Druckabsenkventils mit der Druckmittel wegführenden zweiten Druckmittelverbindung gekoppelt, während dessen Saugseite stromaufwärts des Druckaufbauventils an die erste Druckmittelverbindung sowie an den Hauptbremszylinder angeschlossen ist.

Zur Regelung des Bremsdrucks in einer der Radbremsen ist ein elektronisches Steuergerät vorhanden. Dieses steuert das Druckaufbauventil, das Druckabsenkventil und den Druckerzeuger entsprechend der momentanen Schlupfverhältnissen an den Radbremsen eines Fahrzeugs an. Bei ermitteltem Radschlupf, das heißt bei einem zum Blockieren neigenden Rad, fördert der Druckerzeuger Druckmittel über das Druckabsenkventil aus der zugeordneten Radbremse weg, bis der Bremsdruck schließlich soweit abgebaut ist, dass keine Blockiergefahr mehr besteht. Das Druckaufbauventil ist während dessen geschlossen. Dieses Arbeitsprinzip wird als Rückförderprinzip bezeichnet.

Bei solchen rückfördernden Fahrzeugbremssystemen wird im aktiven Betrieb, das heißt bei angesteuertem Druckerzeuger, dieser Druckerzeuger mit zumindest abschnittsweise konstanter Drehzahl angetrieben. Für den Fall, dass mindestens der Bremsdruck eines Fahrzeugrades eines Bremskreises oberhalb des Solldrucks liegt wird, wie erläuterte, aus der betroffenen Radbremse Druckmittel über das geöffnete Druckabsenkventil zurück in die Bremskammer des Hauptbremszylinders gefördert. Dies bewirkt entweder ein sich entgegen der Betätigungsrichtung zurückbewegenden Bremspedal oder, über den Schwimmkolben des Hauptbremszylinders einen Druckmittelstrom in die zweite Bremskammer. In einer darauf folgenden neuerlichen Druckaufbauphase, d. h. mit dem erneuten Öffnen eines der Druckaufbauven6le, wird dem Bremskreis wieder Druckmittel aus dem Hauptbremszylinder zugeführt. In Folge der dadurch variierenden Mengen an Druckmittel im Hauptbremszylinder ergeben sich Pedalbewegungen, die der Fahrer als störend wahrnimmt. Zusätzlich zur mechanischen Rückwirkung am Bremspedal tritt eine unerwünschte Geräuschentwicklung auf. Die relativ niedrige Frequenz mit der diese Pedalbewegungen stattfinden ist von den hochfrequenten Pedalbewegungen aufgrund der getakteten Arbeitsweise der üblicherweise verwendeten Radialkolbenpumpen als Druckerzeuger zu unterscheiden.

### Vorteile der Erfindung

Dem gegenüber weist das vorgeschlagene Verfahren zur Steuerung oder Regelung eines elektronisch ansteuerbaren, nach dem Rückförderprinzip arbeitenden Fahrzeugbremssystems bzw. das vorgeschlagene, nach diesem Verfahren arbeitende elektronisch ansteuerbare Fahrzeugbremssystem den Vorteil auf, dass die beschriebenen niederfrequenten Pedalrückwirkungen reduziert oder ganz eliminiert werden können. Der Fahrer wird dadurch weniger irritiert, ferner werden die Betriebsgeräusche reduziert. In der Folge wird der Pedalkomfort und letztendlich der Fahrkomfort des Fahrzeugs insgesamt erhöht. Weitere Vorteile oder vorteilhafte Weiterbildungen der Erfindung ergeben sich aus den Unteransprüchen und der nachfolgenden Beschreibung.

Besonders wirkungsvoll lässt sich das Verfahren gemäß Anspruch 2 umsetzen, wenn die Drehzahl variiert wird, mit der der Druckerzeuger angetrieben wird. Die Variation der Antriebsdrehzahl des Druckerzeugers kann gemäß Anspruch 3 geregelt werden durch Messung des Weges und/oder der Geschwindigkeit mit der eine Betätigung des Hauptbremszylinders erfolgt. Diese Betätigung kann mittels entsprechender Wegsensoren erfasst, einem elektronischen Steuergeräts zugeführt und dort zu einem Ansteuersignal für den Antrieb des Druckerzeugers weiterverarbeitet werden. Alternativ dazu kann das Ansteuersignal für den Antrieb des Druckerzeugers auch gesteuert werden. Dazu ist im Steuergerät ein hydraulisches Volumenmodell des Fahrzeugbremssystems hinterlegt, aus welchem das erforderliche Ansteuersignal durch Abschätzung ermittelt wird. Dieses Modell kann durch die Einbeziehung von Messwerten von Drucksensoren, die am Fahrzeugbremssystem vorhanden sein können, verbessert werden.

### Zeichnung

Ein Ausführungsbeispiel der Erfindung ist in der Zeichnung dargestellt und in der nachfolgenden Beschreibung näher erläutert. Figur 1 zeigt beispielhaft den an sich bekannten Aufbau eines elektrohydraulischen, nach dem Rückförderprinzip arbeitenden Fahrzeugbremssystems. Das Flussdiagramm entsprechend Figur 2 zeigt dieses Fahrzeugbremssystem in schematisch vereinfachter Darstellung und in den Figuren 3 und 4 sind Schemata für eine Antriebssteuerung bzw. eine Antriebsregelung des Druckerzeugers dargestellt.

### Beschreibung des Ausführungsbeispiels

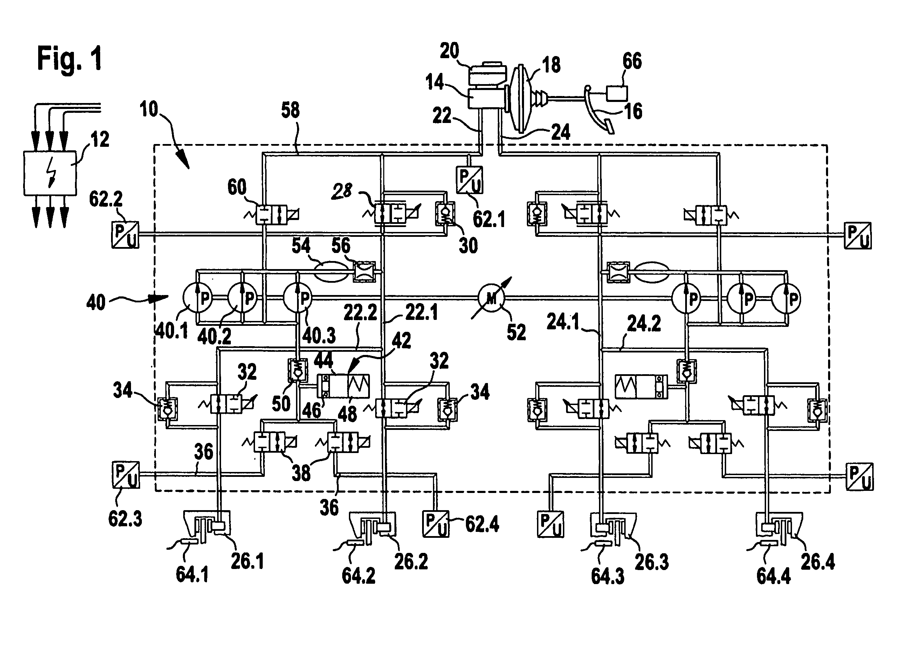

Bei der in Figur 1 dargestellten Fahrzeugbremsanlage 10 handelt es sich exemplarisch um eine elektrohydraulische Bremsanlage mit Fremdkraft betriebener Betriebsbremse und Muskelkraft betriebener Hilfsbremse, die von einem elektronischen Steuergerät 12 bedarfsweise aus einem Normalbremsbetrieb in einen Antiblockierschutzbetrieb, einen Antriebsschlupfregelbetrieb oder einen Fahrstabilitätsregelbetrieb umgeschaltbar ist. Der dargestellte und nachfolgend im Detail erläuterte Aufbau dieser Fahrzeugbremsanlage 10 gehört zum bekannten Stand der Technik.

Die Fahrzeugbremsanlage 10 umfasst einen Hauptbremszylinder 14, der vom Fahrer über ein Bremspedal 16 mit Muskelkraft betätigbar ist. Dem Hauptbremszylinder 14 ist ein Vakuumdruckverstärker 18 vorgeschaltet, welcher die Betätigungskraft des Fahrers hin zu einer höheren Betätigungskraft übersetzt. Mit dem Hauptbremszylinder 10 ist ein Vorratsbehälter 20 verbunden, aus dem im Bedarfsfall Druckmittel der Fahrzeugbremsanlage 10 zuströmen kann. An den Hauptbremszylinder 14 sind zwei hydraulisch voneinander getrennte jedoch symmetrisch aufgebaute Bremskreise 22, 24 angeschlossen. Im Weiterem wird nur der Bremskreis 22 ausführlich beschrieben. In diesem Bremskreis 22 befinden sich zwei Radbremsen 26.1-2, wobei es sich im Ausführungsbeispiel um die Hinterradbremsen des Fahrzeugs handelt. Die Vorderradbremsen sind im zweiten Bremskreis 24 verschaltet (sogenannte schwarz - weiß - Aufteilung der Bremskreise). Der Bremskreis 22 verzweigt sich in einen ersten und einen zweiten Bremskreiszweig 22.1-2 mit jeweils einer kontaktierten Radbremse 26.

Vor dieser Verzweigung ist in den Bremskreis 22 ein sogenanntes Umschaltventil 28 geschaltet. Dabei handelt es sich um ein elektronisch ansteuerbares 2/2-Wege-Proportionalmagnetventil, das von einer Rückstellfeder in seiner Grundstellung gehalten wird. In dieser Grundstellung nimmt das Umschaltventil 28 eine Durchlassstellung ein. In einem Bypass zum Umschaltventil 28 befindet sich ein Rückschlagventil 30, das eine Druckmittelströmung in Richtung vom Hauptbremszylinder 14 zur Radbremse 26 zulässt, und in Gegenrichtung, also von der Radbremse 26 zum Hauptbremszylinder 14 zurück, sperrt. Stromabwärts des Umschaltventils 28 ist jeder Radbremse 26 ein Druckaufbauventil 32 hydraulisch vorgeschaltet. Auch bei diesem Druckaufbauventil 32 handelt es sich um ein elektromagnetisch betätigbares 2/2-Wege-Proportionalmagnetventil, das von einer Rückstellfeder in der Durchlassstellung gehalten ist und durch elektrische Ansteuerung stufenlos in Richtung seiner Sperrstellung betätigbar ist. Auch diesem Druckaufbauventil 32 ist ein Rückschlagventil 34 parallel geschaltet, wobei dieses Rückschlagventil 34 derart wirkt, dass es einen Druckmittelabfluss von der Radbremse 26 zum Hauptbremzylinder 14 zulässt, jedoch einen Druckmittelzufluss vom Hauptbremszylinder in Richtung der Radbremse 26 sperrt.

Zwischen einer Radbremse 26 und dem zugeordneten Druckaufbauventil 32 zweigt eine Abströmleitung 36 ab, in der sich ein Druckabsenkventil 38 befindet. Dieses Druckabsenkventil 38 steuert eine Druckmittelverbindung von der Radbremse 26 zur Saugseite eines Druckerzeugers 40. Das Druckabsenkventil 38 ist ein elektronisch umschaltbares 2/2-Wegeventil, das in der von einer Feder defmierten Grundstellung sperrt. In der Abströmleitung 36 befindet sich zudem ein sogenannter Niederdruckspeicher 42. Dieser Niederdruckspeicher 42 besteht aus einem federbeaufschlagten Kolben 44, der in einem Zylinder beweglich geführt ist und der einen Arbeitsraum 46 von einem Federraum 48 trennt. Im Arbeitsraum 46 kann aus der Radbremse 26 abströmendes Druckmittel zwischengespeichert werden. Ein Rückschlagventil 50, ebenfalls in der Abströmleitung 36 angeordnet, verhindert bei geöffnetem Druckabsenkventil 38 ein Zurückströmen von Druckmittel aus dem Druckerzeuger 40 zurück in eine der Radbremsen 26.

Als Druckerzeuger 40 werden pro Bremskreis beispielhaft drei parallel geschaltete Pumpeneinheiten 40.1 - 3 verwendet. Diese Pumpeneinheiten 40.1 - 3 sind von einem gemeinsamen Antriebsmotor 52 angetrieben. Erfindungsgemäß soll dieser Antriebsmotor 52 elektronisch regelbar sein, sodass die Drehzahl, mit der der Pumpenantrieb erfolgt, variabel ist. Die Pumpeneinheiten 40.1 - 3 fördern Druckmittel über einen Pulsationsdämpfer 54 und eine nachgeordnete Drossel 56 in den Bremskreis 22 zurück und zwar in einem Leitungsbereich, der sich hydraulisch strombwärts des Umschaltventils 28 befindet.

Ergänzend zum bereits Beschriebenen ist eine zweite Ansaugleitung 58 der Fahrzeugbremsanlage 10 vorhanden. Diese Ansaugleitung 58 zweigt unmittelbar vor dem Umschaltventil 28 vom Bremskreis 22 ab und führt ebenfalls zur Saugseite des Druckerzeugers 40. Die Ansaugleitung 58 wird von einem Hockdruckschaltventil 60 gesteuert, welches von seiner Schließstellung durch elektronische Ansteuerung gegen die Kraft einer Rückstellfeder in seine Durchlassstellung umschaltbar ist. Im geöffneten Zustand des Hochdruckschaltventils 60 können die Pumpeneinheiten 40.1 - 3 Druckmittel aus dem Hauptbremszylinder 14 ansaugen, beispielsweise wenn die Druckabsenkventile 38 der Radbremsen 26 geschlossen sind, der Niederdruckspeicher 42 entleert ist und aufgrund der Bremssituation dennoch ein Druckaufbau in wenigstens einer der Radbremsen 26 des Bremskreises 22 notwendig ist.

Zur Regelung der Bremkraft an den Radbremsen 26 der Fahrzeugbremsanlage 10 sind Sensoren 62 vorhanden, deren Messsignale dem elektronischen Steuergerät 12 als Eingangsgrößen zugeführt werden. Dieses elektronische Steuergerät 12 wertet diese Eingangsgrößen (in Figur 1 angedeutet durch Pfeilsymbole in Richtung des Steuergerätes 12) zu Ansteuersignalen aus (Pfeilsymbole die weg vom Steuergerät 12 zeigen), mit denen die erläuterten Magnetventile 28, 32, 38, 60 sowie der Antriebsmotor 52 des Druckerzeugers 40 angesteuert werden. Ein erster Drucksensor 62.1 misst dabei den vom Fahrer durch Betätigung des Hauptbremszylinders 14 erzeugten Druck im Bremskreis 22. Ein zweiter Drucksensor 62.2 erfasst das Druckniveau unmittelbar stomabwärts des Umschaltventils 28 und dritte und vierte Drucksensoren 62.3, 62.4 messen den Bremsdruck in den beiden Radbremsen 26.1 - 2 des Bremskreises 22. Jedem Fahrzeugrad ist zudem ein Radsensor 64.1 - 4 zugeordnet, der die momentane Raddrehzahl und damit deren Veränderung über die Zeit erfasst. Zudem ist ein Bremslichtschalter 66 vorhanden, der mit dem Bremspedal 16 der Fahrzeugbremsanlage 10 verbunden ist und der dessen Betätigung durch den Fahrer erfasst.

Die Wirkungsweise der erläuterten Fahrzeugbremsanlage 10 ist die folgende:

### 1. Normalbremsbetrieb:

Bei störungsfreiem Normalbremsbetrieb, sind alle Magnetventile 28,32, 38, 60 elektrisch angesteuert. Damit sperrt das Umschaltventil 28 den Hauptbremszylinder 14 zur Radbremse 26 hin ab. Das Druckaufbauventil 32 ist geschlossen, gleichzeitig ist das Druckabsenkventil 38 geöffnet. An den Radbremsen 26 liegt damit kein Bremsdruck an.

Mit einer Betätigung des Bremspedals 16 öffnet der Bremslichtschalter 66 und ein Bremswunsch des Fahrers wird vom Steuergerät 12 erkannt. Entsprechend der Höhe dieses Bremswunsches - erfasst durch den hauptbremszylinderseitigen Drucksensor 62.1 - steuert das elektronische Steuergerät 12 das Druckaufbauventil 32 in seine Öffnungsstellung und schaltet das Druckabsenkventil 38 in die Schließstellung um.

Gleichzeitig wird der Antriebsmotor 52 des Druckerzeugers 40 bestromt und gegebenenfalls das Hochdruckschaltventil 60 geöffnet, sofern der Niederdruckspeicher 42 nicht ausreichend mit Druckmittel gefüllt sein sollte. Bei geöffnetem Hochdruckschaltventil 60 fördert der Duckerzeuger 40 Druckmittel aus dem Hauptbremszylinder 14 in die Radbremse 26 und bewirkt dort einen Druckaufbau. Mit einer Entlastung des Bremspedals 16, also einer Zurücknahme des Bremswunsches, wird die Ansteuerung des Druckaufbauventils 32 zurückgenommen und das Druckabsenkventil 38 bestromt. Damit kann Druckmittel aus der Radbremse 26 abströmen zum Niederdruckspeicher 42 bzw. bei gefülltem Niederdruckspeicher 42 zum Druckerzeuger 40 hin. Dessen Pumpeneinheiten 40.1 - 3 fördern das überschüssige Druckmittel zurück in den Bremszweig 22 und von dort bedarfsweise durch Ansteuerung des Umschaltventils 28 zurück zum Hauptbremszylinder 14 oder durch das wiedergeöffnete Druckaufbauventil 32 zurück zur Radbremse 26.

Bei gestörtem Betrieb, d. h. beispielsweise bei ausgefallener Versorgungsspannung, befinden sich alle Magnetventile 28, 32, 38, 60 zwangsweise in der in Figur 1 dargestellten Grundstellung. Auf Grund des dabei bestehenden hydraulischen Durchgangs vom Hauptbremszylinder 14 zu den Radbremsen 26 ist somit ein vom Fahrer durch Muskelkraft manuell gesteuerter Bremsvorgang durchführbar.

### 2. Blockierschutzbetrieb:

Wird durch die Radsensoren 26.1 - 4 der Fahrzeugräder festgestellt, dass eines der Räder des Fahrzeugs während eines Bremsvorgangs zum Blockieren neigt, so wird im Steuergerät 12 eine Bremsdruckabsenkung an der betroffenen Radbremse 26 unabhängig vom Bremswunsch eingeleitet. Durch Schließen des Druckaufbauventils 32 und Öffnen des Druckabsenkventils 38, wie oben erläutert, vermag der dabei angetriebene Druckerzeuger 40 Druckmittel aus der Radbremse 26 wegzufördern und damit den Radbremsdruck zu senken. Der Druck in jeder Radbremse 26 kann in Abhängigkeit der jeweiligen Schlupfverhältnisse am Fahrzeugrad individuell gesteuert oder geregelt werden. Nach Beendigung der Radblockiergefahr wird das betreffende Druckabsenkventil 38 wieder geschlossen, das Druckaufbauventil 32 geöffnet und gegebenenfalls die Ansteuerung des Druckerzeugers 40 unterbrochen. Bei einem neuerlich bestehenden Bremswunsch (betätigtes Bremspedal 16 und betätigter Bremslichtschalter 66) wird mit erneuter Pumpenansteuerung ein Druckaufbau in den Radbremsen 26 bewirkt. Der vom Fahrer während eines Bremsvorgangs betätigte Hauptbremszylinder 14 dient dabei lediglich als Einrichtung zur Erfassung des Bremswunsches. Der in den Radbremsen 26 benötigte Druck wird von den elefctromotorisch angetriebenen Pumpenelementen 40.1 - 3 des Druckerzeugers 40, also durch Fremdkraft erzeugt.

### 3. Antriebsschlupfregelbetrieb:

In diesem Betriebszustand der Fahrzeugsbremsanlage 10 erfolgt keine Betätigung des Hauptbremszylinders 14 durch den Fahrer. An den angetriebenen Fahrzeugrädern wird von den Radsensoren 64.1- 4 ein erhöhter Radschlupf, das heißt ein durchdrehendes Rad festgestellt, beispielsweise durch Vergleich der Fahrzeuggeschwindigkeit mit der Raddrehzahl. Bei durchdrehendem Rad bremst das Steuergerät 12 das betroffene Rad automatisch ab, indem es durch Ansteuerung des Druckerzeugers 40 Druckmittel durch das in der Grundstellung offene Aufbauventil 32 zur Radbremse 26 fördert. Die Pumpenelemente 40.1- 3 saugen dazu Druckmittel aus dem Niederdruckspeicher 42 ab oder bei geöffnetem Hockdruckschaltventil 60 aus dem Vorratsbehälter 20 an. Das Druckabsenkventil 38 befindet sich währenddessen ebenfalls in seiner Grund-/Sperrstellung, sodass ein Bremsdruckaufbau stattfindet. Korreliert die Raddrehzahl wieder mit der Fahrzeuggeschwindigkeit kann ein Druckhalten durch Ansteuerung des Druckaufbauventils 32 erfolgen, wodurch das unter Bremsdruck stehende Druckmittel zwischen dem geschlossenen Aufbauventil 32, dem geschlossenen Absenkventil 38 und der zugeordneten Radbremse 26 eingesperrt wird. Einen erforderlichen falls notwendig werdender weiter Druckabbau in der jeweiligen Radbremse 26 erfolgt, wie beschrieben, durch Ansteuerung des Druckabsenkventils 38. Dieses nimmt dann seine Durchlassstellung ein, sodass der nach wie vor angetriebene Druckerzeuger 40 Druckmittel aus der Radbremse 26 wegfördern kann.

Wie aus der obigen Beschreibung hervorgeht, finden in den verschiedenen Betriebszuständen der Fahrzeugbremsanlage 10 Druckmittelverschiebungen innerhalb des Bremssystems statt. Insbesondere die den Hauptbremszylinder 14 betreffenden Druckmittelströme lösen aufgrund der bestehenden hydraulischen Wirkverbindung Rückwirkungen am Bremspedal 16 aus. Diese sind für den Fahrer, welcher das Bremspedal 16 mit seinem Fuß betätigt, störend wahrzunehmen. Druckmittelströme zum Hauptbremszylinder 14 hin bewirken eine Bewegung des Bremspedals 16 entgegen der Betätigungsrichtung, während Druckmittelströme vom Hauptbremszylinder 14 weg eine Bewegung des Bremspedals 16 in Betätigungsrichtung auslösen. Mit den... Pedalpulstationen können Betriebsgeräusche verbunden sein. Die im Falle eines Regelvorgangs der Fahrzeugbremsanlage auftretenden Pedalbewegungen haben eine relativ niedrige Frequenz im Bereich zwischen 0,5 bis ca. 6,0 Hz. Die niedrige Frequenz unterscheidet die regelungsbedingte Pedalpulsationen von pumpenbedingten Pedalpulsationen. Letztere entstehen aufgrund des getakteten Arbeitsprinzips der Pumpenelemente 40.1 - 3, und weisen eine entsprechend hohe Frequenz auf. Als Pumpenelemente 40.1 - 3 werden üblicherweise Kolbenpumpen eingesetzt.

Die Erfindung zielt darauf ab, die niederfrequenten, regelungsbedingten Pedalpulstationen dadurch zu dämpfen, dass sich die Druckmittelströme zum Hauptbremszylinder 14 hin und die Druckmittelströme vom Hauptbremszylinder 14 weg einander idealerweise ausgleichen. Mit anderen Worten soll die Differenz dieser Druckmittelströme einen möglichst geringen Betrag, vorzugsweise einen Betrag von Null annehmen. Dies lässt sich vorteilhaft durch eine Variation der Antriebsdrehzahl des Druckerzeugers 40 erreichen.

Der Volumenstrom von einem Bremskreis 22 zum Hauptbremszylinder 14 hin hängt, wie erläutert, vom Betätigungszustand der Umschaltventile 28, der Druckaufbauventile 32 und der Druckabsenkventile 38 eines Bremskreises 22 sowie von der Drehzahl des Druckerzeugers 40 ab. Um eine Pedalbewegung zu vermeiden, muss der resultierende Gesamtvolumenstrom am Hauptbremszylinder 14 minimiert werden. Ausgangsgrößen dabei sind die Volumenströme in die Radbremsen 26 sowie die Förderleistungen der Pumpenelemente 40.1-3, welche sich direkt über den Durchfluss messenden Sensoren, oder indirekt über die ohnehin vorhandenen Drucksensoren 62 messen oder mit Hilfe eines im elektronischen Steuergerät 12 hinterlegten hydraulischen Volumenmodells des Fahrzeugbremssystems abgeschätzen lassen. Im Falle der Schätzung ergeben sich die Volumenströme an den einzelnen Magnetventilen 28,32,38,40 aus den Solldruckanforderungen und liegen damit ohne Zeitverzug vor. Sowohl die Schätzung wie auch die indirekte Messung kann sich auf Messwerte eventuell vorhandener Sensorik aus Drucksensoren 62 am Hauptbremszylinder 14, an den Radbremsen 26, in den Bremskreisen 22,24 oder an den Niederdruchspeichern 42 stützen. Das Steuergerät 12 wertet die Messergebnisse zu einem veränderlichen Ansteuersignal für den drehzahlvariabel ausgelegten Antriebsmotor 52 des Druckerzeugers 40 aus. Die Ansteuerung des Antriebsmotors 52 des Druckerzeugers 40 ist in einem elektronischen Steuer- oder Regelkreis umsetztbar.

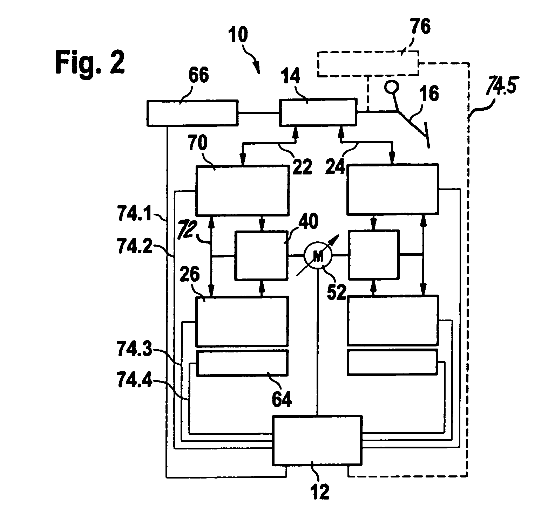

Figur 2 zeigt die bereits beschriebenen Fahrzeugbremsanlage mit Rückförderhydraulik gemäß Figur 1 nochmals schematisch stark vereinfacht. Erkennbar ist ein zweikreisig angelegter Hauptbremszylinder 14 an den zwei symmetrisch augebildete Bremskreise 22,24 angeschlossen sind. Der Hauptbremszylinder 14 ist über ein Bremspedal 16 betätigbar. Hydraulisch dem Hauptbremszylinder 14 nachgeschaltet ist eine Einheit 70 zur Modulation des Bremsdrucks. Diese Einheit 70 wirkt unter anderem auf eine Radbremse 26 ein. Ein Druckerzeuger 40 mit Steuer- oder regelbarem Antriebsmotor 52 ist hydraulisch direkt angeschlossen an die Radbremsen 26, an die Einheit zur Modulation des Bremsdrucks 70 und an eine Druckmittelverbindung 72 von der Einheit zur Modulation des Bremsdrucks 70 zur Radbremse 26. Radsensoren 64 und ein Sensor 66 im Hauptbremszylinder 14 leiten ihre Messgrößen einem elektronischen Steuergerät 12 zu, welches daraus Ansteuersignale für die Einheit zur Modulation des Bremsdrucks 70 an den Radbremsen 26 und Ansteuersignale zum Antriebsmotor 52 für den Druckerzeuger 40 errechnet. In Figur 2 sind die Signalleitungen 74.1-4 von den Hydraulikleitungen 72 des Fahrzeugbremssystems durch eine geringere Strichstärke unterscheidbar. Eine weitere gestrichelte Signalleitung 74.5 führt von einem an das Bremspedal 16 angeschlossenen, ebenfalls gestrichelt gezeichneten Pedalsensor 76 zum elektronischen Steuergerät 12. Dies soll die alternative Verwendungsmöglichkeit eines Pedalsensors 76 zur Darstellung eines Regelkreises veranschaulichen.

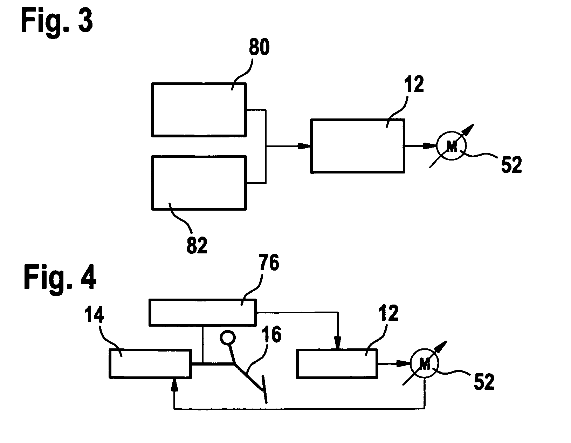

Figur 3 zeigt nochmals anhand einer schematischen Darstellung den Grundgedanken der Erfindung, nämlich die Volumenströme 80 des Druckerzeugers 40 und die Volumenströme 82 der Radbremsen 26 sensorisch zu erfassen und das Messergebnis einem elektronischen Steuergerät 12 zuzuführen, um daraus ein veränderliches Ansteuersignal für einen regelbaren Antriebsmotor 52 des Druckerzeugers 40 zu ermitteln.

Figur 4 veranschaulicht nochmals den bereits in Verbindung mit Figur 1 erwähnten Regelkreis zur Ansteuerung des Antriebsmotors 52 des Druckerzeugers 40. Dazu ist am Bremspedal 16 ein Pedalweg- oder Pedalgeschwindigkeitssensor 76 vorgesehen, dessen Messgröße im elektronischen Steuergerät 12 weiterverarbeitet wird. Der Sollwert für die Pedalgeschwindigkeit ist Null, die Stellgröße ist die Drehzahl des Druckerzeugers 40. Sie wird über den regelbaren Antriebsmotor 52 eingestellt.

Selbstverständlich sind Änderungen oder Ergänzungen gegenüber dem beschriebenen Ausführungsbeispiel möglich, ohne vom Grundgedanken der Erfindung abzuweichen. In diesem Zusammenhang ist darauf hinzuweisen, dass die Erfindung nicht auf eine im Ausführungsbeispiel dargestellte und in der Beschreibung erläuterte elektrohydraulische Fahrzeugbremsanlage mit Fremdkraft betriebener Betriebsbremse und Muskelkraft betriebener Hilfsbremse eingeschränkt ist, sondern auch auf konventionelle Antiblockierschutz-, Fahrstabilitätsregelungs- und Antriebsschlupfregelungs-Bremsanlagen einsetzbar ist, die nach dem Rückförderprinzip arbeiten und bei denen der notwendige Bremsdruck ausschließlich durch Muskelkraft des Fahrers erzeugt wird. Selbstverständlich ist der Erfindung auch nicht auf zweikreisig angelegte Fahrzeugbremssysteme eingeschränkt, sondern kann auch in einkreisigen Anlagen entsprechend umgesetzt werden.

## Patentansprüche

1. Verfahren zur Steuerung oder Regelung eines elektronisch ansteuerbaren, nach dem Rückförderprinzip arbeitenden Fahrzeugbremssystems (10) mit einem durch Muskelkraft betätigbaren Hauptbremszylinder (14) zur Versorgung wenigstens einer Radbremse (26.1-4) eines Bremskreises (22, 24) mit Bremsdruck, mit einer Einrichtung (70) zur Modulation des Bremsdrucks an der Radbremse (26), die ein von einem elektronischen Steuergerät (12) ansteuerbares Druckaufbauventil (32) in einer ersten Druckmittelverbindung vom Hauptbremszylinder (14) zur Radbremse (26) und ein vom elektronischen Steuergerät (12) ansteuerbares Druckabsenkventil (38) in einer zweiten von der Radbremse (26) wegführenden Druckmittelverbindung umfasst,
mit einem Druckerzeuger (40), der von einem durch das Steuergerät (12) ansteuerbaren Antriebsmotor (52) antreibbar ist, wobei dessen Saugseite stromabwärts des Druckabsenkventils (38) an die zweite Druckmittelverbindung sowie an den Hauptbremszylinder (14) und dessen Druckseite stromaufwärts des Druckaufbauventils (32) an die erste Druckmittelverbindung angeschlossen ist und mit Sensoren (62, 64, 66) zur Erfassung von Zustandsgrößen des Fahrzeugbremssystems, **dadurch gekennzeichnet, dass**
mittels wenigstens eines Sensors (76) der Weg oder die Geschwindigkeit mit der eine Betätigung eines Bremspedals (16) erfolgt vom elektronischen Steuergerät (12) erfasst und zu einer Stellgröße weiterverarbeitet wird, wobei anhand der Stellgröße die Drehzahl des Antriebsmotors (52) des Druckerzeugers (40) unter der Maßgabe variiert wird, dass der Sollwert für die Pedalgeschwindigkeit Null ist.

2. Verfahren nach Anspruch 1, **dadurch gekennzeichnet, dass** zur Ermittlung der jeweiligen Drehzahl des Antriebsmotors (52) des Druckerzeugers (40) im elektronischen Steuergerät (12) ein hydraulisches Volumenmodell des Fahrzeugbremssystems (10) elektronisch hinterlegt ist, aus dem in Abhängigkeit vom Weg oder von der Geschwindigkeit einer Betätigung des Bremspedals (16) die Stellgröße durch Abschätzung ermittelt wird.

3. Elektronisch ansteuerbares nach dem Rückförderprinzip arbeitendes Fahrzeugbremssystem mit einem Muskelkraft betätigbaren Hauptbremszylinder (14) zur Versorgung wenigstens einer Radbremse (26.1-4) eines Bremskreises (22, 24) mit Bremsdruck, mit einer Einrichtung (70) zur Modulation des Bremsdrucks an der Radbremse (26), die ein von einem elektronischen Steuergerät (12) ansteuerbares Druckaufbauventil (32) in einer ersten Druckmittelverbindung vom Hauptbremszylinder (14) zur Radbremse (26) und ein vom elektronischen Steuergerät (12) ansteuerbares Druckabsenkventil (38) in einer zweiten von der Radbremse (26) wegführenden Druckmittelverbindung umfasst und mit einem Druckerzeuger (40), der von einem durch das elektronische Steuergerät (12) ansteuerbaren Antriebsmotor (52) antreibbar ist, wobei dessen Saugseite stromabwärts des Druckabsenkventils (38) an die zweite Druckmittelverbinndung sowie an den Hauptbremszylinder (14) und dessen Druckseite stromaufwärts des Druckaufbauventils (32) an die erste Druckmittelverbindung angeschlossen ist und
mit Sensoren (62, 64, 66, 76) zur Erfassung von Zustandsgrößen des Fahrzeugbremssystems **dadurch gekennzeichnet, dass** das Steuergerät (12) nach einem Computerprogramm arbeitet, welches unter Auswertung der Messergebnisse der Sensoren (62, 64, 66, 76) das Verfahren nach einem der Ansprüche 1 oder 2 anwendet.

4. Fahrzeugbremssystem nach Anspruch 3, **dadurch gekennzeichnet, dass** das Fahrzeugbremssystem (10) eine Fremdkraft betriebene Betriebsbremse, eine Muskelkraft betriebene Hilfsbremse und eine elektrisch ansteuerbare Ventileinrichtung (28) aufweist, welche die Fahrzeugbremsanlage (10) vom Hilfsbremsbetrieb in den Betriebbremsbetrieb umschaltet.

## Claims

1. Method for performing open-loop or closed-loop control of an electronically actuable vehicle brake system (10) which operates according to the feedback principle and has a master brake cylinder (14) which can be activated by muscle power and has the purpose of supplying at least one wheel brake (26.1-4) of a brake circuit (22, 24) with brake pressure, having a device (70) for modulating the brake pressure at the wheel brake (26), which device comprises a pressure increasing valve (32), which can be actuated by an electronic control device (12), in a first pressure medium connection from the master brake cylinder (14) to the wheel brake (26) and a pressure lowering valve (38), which can be actuated by the electronic control device (12), in a second pressure medium connection leading away from the wheel brake (26),
having a pressure generator (40) which can be driven by a drive motor (52) which can be actuated by the control device (12), wherein the suction side thereof is connected downstream of the pressure lowering valve (38) to the second pressure medium connection and to the master brake cylinder (14) and the pressure side thereof is connected upstream of the pressure increasing valve (32) to the first pressure medium connection, and having sensors (62, 64, 66) for detecting state variables of the vehicle brake system, **characterized in that** the travel or the speed with which a brake pedal (16) is activated are detected by the electronic control device (12) by means of at least one sensor (76) and further processed to form a manipulated variable, wherein the rotational speed of the drive motor (52) of the pressure generator (40) is varied on the basis of the manipulated variable with the proviso that the setpoint value for the pedal speed is zero.

2. Method according to Claim 1, **characterized in that**, in order to determine the respective rotational speed of the drive motor (52) of the pressure generator (40) in the electronic control device (12), a hydraulic volume model of the vehicle brake system (10) is electronically stored, from which volume model the manipulated variable is determined by estimation as a function of the travel or of the speed of an activation of the brake pedal (16).

3. Electronically actuable vehicle brake system which operates according to the feedback principle and has a master brake cylinder (14) which can be activated by muscle power and has the purpose of supplying at least one wheel brake (26.1-4) of a brake circuit (22, 24) with brake pressure, having a device (70) for modulating the brake pressure at the wheel brake (26), which device (70) comprises a pressure increasing valve (32), which can be actuated by an electronic control device (12), in a first pressure medium connection from the master brake cylinder (14) to the wheel brake (26), and a pressure lowering valve (38), which can be actuated by the electronic control device (12), in a second pressure medium connection leading away from the wheel brake (26), and having a pressure generator (40) which can be driven by a drive motor (52) which can be actuated by the electronic control device (12), wherein the suction side thereof is connected downstream of the pressure lowering valve (38) to the second pressure medium connection and to the master brake cylinder (14) and the pressure side thereof is connected upstream of the pressure increasing valve (32) to the first pressure medium connection, and
having sensors (62, 64, 66, 76) for detecting state variables of the vehicle brake system, **characterized in that** the control device (12) operates according to a computer program which applies the method according to either of Claims 1 and 2 by utilizing the measurement results of the sensors (62, 64, 66, 76).

4. Vehicle brake system according to Claim 3, **characterized in that** the vehicle brake system (10) has a service brake which is operated by extraneous force, an auxiliary brake which is operated by muscle power and an electrically actuable valve device (28) which switches over the vehicle brake system (10) from the auxiliary braking mode into the service braking mode.

## Revendications

1. Procédé de commande ou de régulation d'un système de freinage de véhicule (10) à commande électronique, fonctionnant selon le principe de refoulement, comprenant
un cylindre de freinage principal (14) pouvant être commandé par la force musculaire, pour l'alimentation en pression de freinage d'au moins un frein de roue (26.1-4) d'un circuit de freinage (22, 24),
un dispositif (70) pour moduler la pression de freinage au niveau du frein de roue (26), qui comprend une soupape d'augmentation de pression (32) pouvant être commandée par un appareil de commande électronique (12) dans une première liaison par fluide sous pression depuis le cylindre de freinage principal (14) jusqu'au frein de roue (26) et une soupape d'abaissement de pression (38) pouvant être commandée par l'appareil de commande électronique (12) dans une deuxième liaison par fluide sous pression partant du frein de roue (26),
un générateur de pression (40), qui peut être entraîné par un moteur d'entraînement (52) pouvant être commandé par l'appareil de commande (12), son côté d'aspiration étant raccordé en aval de la soupape d'abaissement de pression (38) à la deuxième liaison par fluide sous pression ainsi qu'au cylindre de freinage principal (14) et son côté de pression étant raccordé en amont de la soupape d'augmentation de pression (32) à la première liaison par fluide sous pression et
des capteurs (62, 64, 66) pour détecter des grandeurs d'état du système de freinage du véhicule, **caractérisé en ce que**, au moyen d'au moins un capteur (76), la course ou la vitesse à laquelle a lieu un actionnement de la pédale de frein (16) est détectée par l'appareil de commande électronique (12) et est traitée pour fournir une grandeur de réglage, le régime du moteur d'entraînement (52) du générateur de pression (40) étant modifié à l'aide de la grandeur de réglage à condition que la valeur de consigne pour la vitesse de la pédale soit nulle.

2. Procédé selon la revendication 1, **caractérisé en ce que** pour déterminer le régime respectif du moteur d'entraînement (52) du générateur de pression (40) dans l'appareil de commande électronique (12), un modèle de volume hydraulique du système de freinage du véhicule (10) est consigné de manière électronique, à partir duquel, en fonction de la course ou de la vitesse d'un actionnement de la pédale de frein (16), la grandeur de réglage est déterminée par estimation.

3. Système de freinage de véhicule à commande électronique, fonctionnant selon le principe de refoulement, comprenant
un cylindre de freinage principal (14) pouvant être commandé par la force musculaire, pour l'alimentation en pression de freinage d'au moins un frein de roue (26.1-4) d'un circuit de freinage (22, 24),
un dispositif (70) pour moduler la pression de freinage au niveau du frein de roue (26), qui comprend une soupape d'augmentation de pression (32) pouvant être commandée par un appareil de commande électronique (12) dans une première liaison par fluide sous pression depuis le cylindre de freinage principal (14) jusqu'au frein de roue (26) et une soupape d'abaissement de pression (38) pouvant être commandée par l'appareil de commande électronique (12) dans une deuxième liaison par fluide sous pression partant du frein de roue (26), et
un générateur de pression (40), qui peut être entraîné par un moteur d'entraînement (52) pouvant être commandé par l'appareil de commande électronique (12), son côté d'aspiration étant raccordé en aval de la soupape d'abaissement de pression (38) à la deuxième liaison par fluide sous pression ainsi qu'au cylindre de freinage principal (14) et son côté de pression étant raccordé en amont de la soupape d'augmentation de pression (32) à la première liaison par fluide sous pression et
des capteurs (62, 64, 66, 76) pour détecter des grandeurs d'état du système de freinage du véhicule, **caractérisé en ce que** l'appareil de commande (12) fonctionne selon un programme informatique qui utilise le procédé selon l'une quelconque des revendications 1 ou 2 par analyse des résultats de mesure des capteurs (62, 64, 66, 76).

4. Système de freinage de véhicule selon la revendication 3, **caractérisé en ce que** le système de freinage de véhicule (10) présente un frein de service entraîné par une force extérieure, un frein auxiliaire entraîné par une force musculaire, et un dispositif de soupape (28) à commande électrique, qui commute l'installation de freinage du véhicule (10) du mode de frein auxiliaire au mode de frein de service.
